# EUROPEAN PATENT APPLICATION

(11) **EP 4 797 191 A1**
(43) Date of publication of application: **26.08.2026**
(21) Application number: 25203475.6
(22) Date of filing: 19.09.2025
(51) Int. Cl.: G06Q 50/02, G06V 20/10

(54) **METHOD AND SYSTEM TO ESTIMATE SEVERITY AND CAUSALITY FOR PLANT ANOMALIES IN A CONTROLLED ENVIRONMENT**

(30) Priority: 19.02.2025 IN 202521014182
(71) Applicant: Tata Consultancy Services Limited, Maharashtra (IN)
(72) Inventor: BOSE CHOUDHURY, Swagatam, 400601 Thane, Maharashtra (IN); SARANGI, Sanat, 400601 Thane, Maharashtra (IN); SINGH, Dineshkumar Jang Bahadur, 400601 Thane, Maharashtra (IN); PAPPULA, Srinivasu, 500081 Hyderabad, Telangana (IN)
(74) Representative: Goddar, Heinz J.

(57) **Abstract**

The embodiments of the present disclosure address unresolved problems of precise and scalable anomaly detection, root cause analysis, anomaly severity estimation, and trend analysis for plants within controlled environments. Embodiments herein provide a method and system for estimating severity and causality for plant development anomalies in plants in a controlled environment. The system uses RGB image based analysis to identify subtle, similar looking growth anomalies and timely corrective actions. System estimates anomaly severity by analyzing real-time data and dynamically generated synthetic baseline plant data for non-linear severity growth for plant anomalies. The system performs root cause analysis with prioritized rankings, severity zone mapping, severity trend estimation, and tailored role-specific insights to enable effective decision-making and targeted interventions in plant farming environments. Finally, the system identifies and ranks potential root causes of plant-specific stress symptoms along with providing a final zone, bench and rack health index and overall health status.

## Description

### CROSS-REFERENCE TO RELATED APPLICATIONS AND PRIORITY

The present application claims priority from Indian patent application no.202521014182, filed on February 19, 2025.

### TECHNICAL FIELD

The disclosure herein generally relates to the field of plant health diagnostics, and more particularly to, a method and system for estimating severity and causality for plant development anomalies in plants in a controlled environment.

### BACKGROUND

Indoor vertical farms growing leafy herbs often operate with shared infrastructure for each growing bench, such as irrigation, fertigation, lighting, and environmental control systems. A single bench typically houses multiple grow-pots (spatially arranged in a grid) to maximize efficiency. However, due to varying factors such as uneven resource distribution, mechanical malfunctions, or pathogen exposure, herbs within individual grow-pots may experience growth imbalances or stress symptoms. These symptoms often remain unnoticed until they become severe, leaving the grower with limited corrective options.

When anomalies like yellowing, glassiness, tip burn, or blackening begin to emerge across a bench, growers face several challenges such as delayed detection, spread and escalation, root cause interpretation, and time sensitivity. In the absence of a robust system for early detection, analysis, and actionable insights, growers are left vulnerable to severe crop losses, reduced quality, and operational inefficiencies. Existing solutions focus on anomaly detection in ambient sensor data, primarily identifying anomalies like temperature and humidity deviations which are largely different from growth anomalies found in plants in the controlled environment, for example basil.

### SUMMARY

Embodiments of the present disclosure present technological improvements as solutions to one or more of the above-mentioned technical problems recognized by the inventors in conventional systems. For example, in one embodiment, a method for estimating severity and causality for plant development anomalies in plants in a controlled environment is provided. The processor-implemented method includes receiving, via an Input/Output (I/O) interface, a plurality of images of one or more plants over a bench in a controlled environment as input, pre-processing the received plurality of images using a predefined deep learning technique to perform data homogenization and structural isolation followed by a pseudo-spectral signal extraction and waveform transformation to identify deviations indicative of phenotypic anomalies, and analyzing the pre-processed plurality of images using an anomaly detector to identify one or more anomalies in the plants of the controlled environment, wherein the identified one or more anomalies in the plants of the controlled environment are consumed by an Anomaly Layering Detection Index (ALDI) generator module to provide an index based on localization and layering of the one or more anomalies in the plants of the controlled environment.

Further, the processor-implemented method includes estimating severity of each of the one or more anomalies in the plants of the controlled environment from values of the index using an anomaly severity estimator, combining the estimated severity for each of the one or more anomalies using an integrated severity score generator to get a final severity score for all identified anomalies, analyzing the identified one or more anomalies and the overall severity percentage to determine a potential root cause and a possibility ranking of causal factors via a predefined Root Cause Analysis and Ranking (RCAR) module, calculating a Zone Health Index (ZHI), Bench Health Index (BHI), Rack Health Index (RHI), and a severity trend to analyze progress of the severities over time using a predefined deep learning model, and generating persona based comprehensive recommendation of final health index (FHI) based on the calculated ZHI, BHI, RHI, and a severity trend for improving plant health using a predefined large language model (LLM) based advisor module.

In another embodiment, a system for estimating severity and causality for plant development anomalies in plants in a controlled environment is provided. The system comprises a memory storing a plurality of instructions, one or more Input/Output (I/O) interfaces, and one or more hardware processors coupled to the memory via the one or more I/O interfaces. The one or more hardware processors are configured by the instructions to receive, via an Input/Output (I/O) interface, a plurality of images of one or more plants over a bench in a controlled environment as input, pre-process the received plurality of images using a predefined deep learning technique to perform data homogenization and structural isolation followed by a pseudo-spectral signal extraction and waveform transformation to identify deviations indicative of phenotypic anomalies, and analyze the pre-processed plurality of images using an anomaly detector to identify one or more anomalies in the plants of the controlled environment, wherein the identified one or more anomalies in the plants of the controlled environment are consumed by an Anomaly Layering Detection Index (ALDI) generator module to provide an index based on localization and layering of the one or more anomalies in the plants of the controlled environment.

Further, the one or more hardware processors are configured by the instructions to estimate severity of each of the one or more anomalies in the plants of the controlled environment from values of the index using an anomaly severity estimator, combine the estimated severity for each of the one or more anomalies using an integrated severity score generator to get a final severity score for all identified anomaly, analyze the identified one or more anomalies and the overall severity percentage to determine a potential root cause and a possibility ranking of causal factors via a predefined Root Cause Analysis and Ranking (RCAR) module, calculate a Zone Health Index (ZHI), Bench Health Index (BHI), Rack Health Index (RHI), and a severity trend to analyze progress of the severities over time using a predefined deep learning model, and generate persona based comprehensive recommendation of final health index (FHI) based on the calculated ZHI, BHI, RHI, and a severity trend for improving plant health using a predefined large language model (LLM) based advisor module.

In yet another aspect, there are provided one or more non-transitory machine-readable information storage mediums comprising one or more instructions, which when executed by one or more hardware processors causes a method for estimating severity and causality for plant development anomalies in a controlled environment is provided. The processor-implemented method includes receiving, via an Input/Output (I/O) interface, a plurality of images of one or more plants over a bench in a controlled environment as input, pre-processing the received plurality of images using a predefined deep learning technique to perform data homogenization and structural isolation followed by a pseudo-spectral signal extraction and waveform transformation to identify deviations indicative of phenotypic anomalies, and analyzing the pre-processed plurality of images using an anomaly detector to identify one or more anomalies in the plants of the controlled environment, wherein the identified one or more anomalies in the plants of the controlled environment are consumed by an Anomaly Layering Detection Index (ALDI) generator module to provide an index based on localization and layering of the one or more anomalies in the plants of the controlled environment.

Further, the processor-implemented method includes estimating severity of each of the one or more anomalies in the plants of the controlled environment from values of the index using an anomaly severity estimator, combining the estimated severity for each of the one or more anomalies using an integrated severity score generator to get a final severity score for all identified anomaly, analyzing the identified one or more anomalies and the overall severity percentage to determine a potential root cause and a possibility ranking of causal factors via a predefined Root Cause Analysis and Ranking (RCAR) module, calculating a Zone Health Index (ZHI), Bench Health Index (BHI), Rack Health Index (RHI), and a severity trend to analyze progress of the severities over time using a predefined deep learning model, and generating persona based comprehensive recommendation of final health index (FHI) based on the calculated ZHI, BHI, RHI, and a severity trend for improving plant health using a predefined large language model (LLM) based advisor module.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for estimating anomalies in crops in a controlled environment, according to some embodiments of the present disclosure.
FIGS. 2A through 2B is an overall functional block diagram illustrating the system of FIG. 1 for a comprehensive assessment of plant health by detecting and analyzing anomalies, estimating their severity, and identifying potential root causes, according to some embodiments of the present disclosure.
FIGS. 3A through 3B is an exemplary flow diagram illustrating a processor-implemented method for estimating anomalies in the plants in the controlled environment, according to some embodiments of the present disclosure.
FIGS. 4A and 4B are a schematic diagrams to show overlapping and non-overlapping region coordinates, according to some embodiments of the present disclosure.
FIGS. 5A through 5B a block diagram to illustrate identification and localization of growth anomalies including glassiness, tipburn, blackening and yellowing, while estimating overlapping anomalies for multiple anomaly scenarios, according to some embodiments of the present disclosure.
FIGS. 6A through 6B shows a block diagram to illustrate estimation of the anomaly severity by analyzing real-time data and dynamically generated synthetic baseline plant data for non-linear severity growth for plant anomalies like glassiness and tipburn, according to some embodiments of the present disclosure.
FIG. 7 shows a block diagram for root cause analysis with prioritized rankings, severity zone mapping, severity trend estimation, and tailored role-specific insights to enable effective decision-making and targeted interventions in plant farming environments, according to some embodiments of the present disclosure.

### DETAILED DESCRIPTION OF EMBODIMENTS

Exemplary embodiments are described with reference to the accompanying drawings. In the figures, the left-most digit(s) of a reference number identify the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Indoor vertical farms growing leafy herbs often operate with shared infrastructure for each growing bench, such as irrigation, fertigation, lighting, and environmental control systems. A single bench typically houses multiple grow-pots (spatially arranged in a grid) to maximize efficiency. However, due to varying factors such as uneven resource distribution, mechanical malfunctions, or pathogen exposure, herbs within individual grow-pots may experience growth imbalances or stress symptoms. These symptoms often remain unnoticed until they become severe, leaving the grower with limited corrective options. When anomalies like yellowing, glassiness, tip burn, or blackening begin to emerge across a bench, growers face several challenges:
**Delayed Detection:** Symptoms are often identified visually, which is prone to human error and delay. By the time symptoms are observed, the damage might have already escalated.
**Spread and Escalation:** Unchecked anomalies can propagate across the bench, affecting a larger area and creating zones of high severity, ultimately compromising yield and quality.
**Root Cause Interpretation:** Growers lack an analytical framework to correlate observed symptoms with their underlying causes (e.g., irrigation issues, nutrient deficiencies, or pest infestations). This leads to reactive measures rather than targeted, timely interventions.
**Time Sensitivity:** Without rapid interpretation and corrective actions, the window for intervention narrows significantly, increasing the risk of economic losses.

In the absence of a robust system for early detection, analysis, and actionable insights, growers are left vulnerable to severe crop losses, reduced quality, and operational inefficiencies.

The method and system disclosed involves an imaging system that performs precise and scalable anomaly detection, anomaly severity estimation, and trend analysis for plants within a controlled environment. The system helps to provide a bench and rack level health status, estimating the most probable cause for the anomaly along with tracking severity trends over time. Key elements of the solution provided by the system include:
**Early Detection:** Using imaging technology, stress symptoms are identified at their earliest stages, even when visually indistinguishable to the human eye. This allows for faster responses, minimizing escalation.
**Severity Estimation and Health Scoring:** To quantify the severity of each anomaly on individual leaves, plants, and across the entire bench. This allows for a comprehensive health score that reflects the overall condition of each section.
**Root Cause Analysis:** By interpreting symptom patterns (locations, severity, and cooccurrence), the system identifies probable root causes, such as irrigation blockage, nutrient imbalance, or pest activity. A probability framework reinforces the ranking of potential causes, helping growers prioritize actionable solutions.
**Bench Zone Mapping:** The system generates a visual map of affected zones, benches and racks based on calculated health indices, showing the rate and area of symptom spread. Each zone, bench and rack are tagged with its likely cause and recommend corrective measures.
**Historical Reinforcement:** By integrating historical data from previous images, the system refines its analysis over time via a feedback loop and helps to detect patterns that may signal recurring issues.
**Synthetic Data Generation:** To address the scarcity of data on specific plant anomalies, predefined modules were developed to generate synthetic data. This is crucial for the initial configuration of the system.
**Severity Trend Analysis and Anomaly Tracking:** By analyzing severity scores over time, the system helps predict the progression of anomalies and identifies potential risk areas, allowing for proactive farm management.
**Persona-Based Insights:** The solution is novel in its ability to provide tailored outputs to different stakeholders, ensuring user-specific actionable insights. The output is presented as a clear and concise advisory, enabling growers to take immediate, targeted actions such as adjusting fertigation schedules, applying specific treatments, or isolating affected zones.

Embodiments herein provide a method and system for estimating severity and causality for plant development anomalies in plants in a controlled environment. The system involves an imaging module that performs precise and scalable anomaly detection, anomaly severity estimation, and trend analysis for plants within an indoor environment. The system helps to provide a bench and rack level health status, estimating the most probable cause for the anomaly along with tracking severity trends over time.

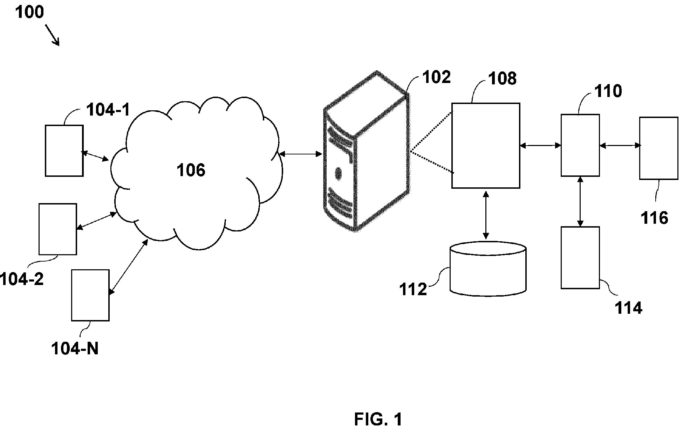

Referring now to the drawings, and more particularly to FIG. 1 through FIG. 7, where similar reference characters denote corresponding features consistently throughout the figures, there are shown preferred embodiments, and these embodiments are described in the context of the following exemplary system and/or method.

FIG. 1 illustrates a block diagram of a system 100 for estimating severity and causality for plant development anomalies in plants in a controlled environment, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

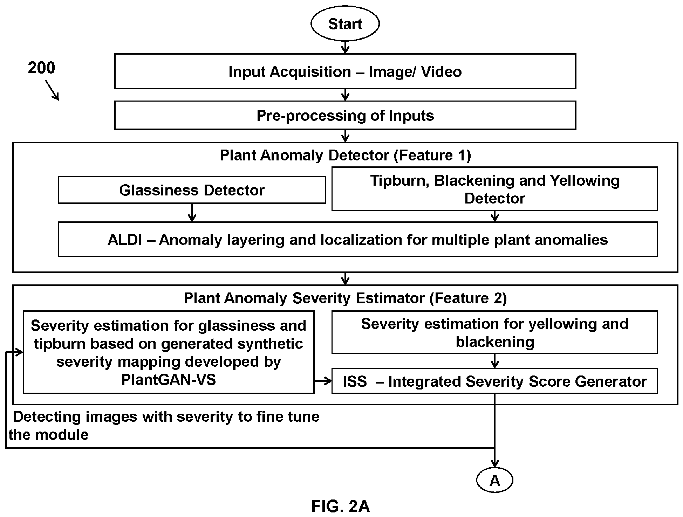

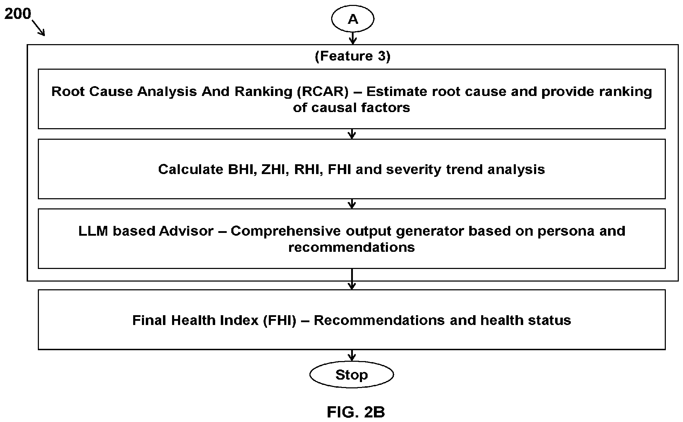

FIG. 2A and 2B is an overall functional block diagram 200 to illustrate the system for a comprehensive assessment of plant health by detecting and analyzing anomalies, estimating their severity, and identifying potential root causes, according to some embodiments of the present disclosure. In one embodiment, the system 100 is configured for identification and localization of plant growth anomalies including glassiness, tip burn, blackening and yellowing, while estimating overlapping anomalies for multiple anomaly scenarios. The system 100 uses RGB image/ video data based analysis to identify subtle, similar looking growth anomalies that are non-obvious to the human eye to enable precise diagnostics and timely corrective actions. Further, the system 100 is configured for estimating the anomaly severity by analyzing real-time data and dynamically generated synthetic baseline data for non-linear severity growth for plant anomalies like glassiness and tip burn. Moreover, the system 100 is configured for root cause analysis with prioritized rankings, severity zone mapping, severity trend estimation, and tailored role-specific insights to enable effective decision-making and targeted interventions in plant farming environments. Finally, the system 100 identifies and ranks potential root causes of plant-specific stress symptoms along with providing a final zone, bench and rack health index and overall health status.

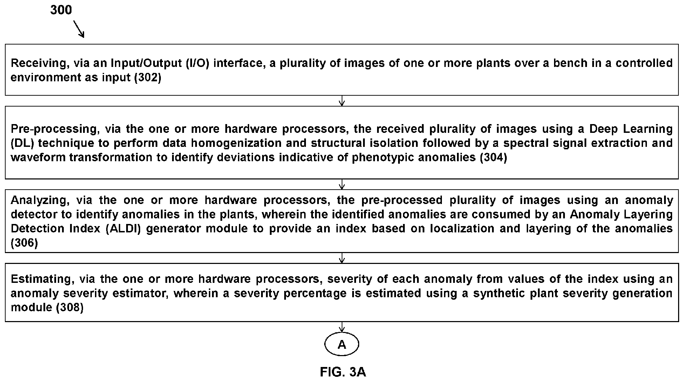

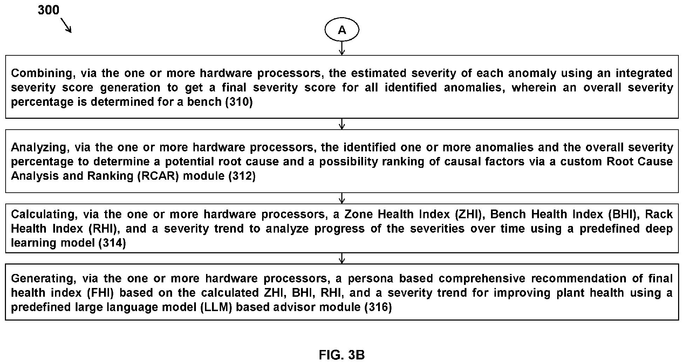

FIGS. 3A through 3B is a flow diagram illustrating a processor-implemented method 300 for estimating severity and causality for plant development anomalies in plants in a controlled environment implemented by the system 100 of FIG. 1, in accordance with an embodiment of the present disclosure. Functions of the components of the system 100 are now explained through steps of flow diagram in FIG. 3, according to some embodiments of the present disclosure. In the method and system for estimating severity and causality for plant development anomalies in plants in a controlled environment.

Initially, at step 302 of the processor-implemented method 300, the one or more hardware processors 108 are configured by the programmed instructions to receive, via an Input/Output (I/O) interface, a plurality of images of one or more plants over a bench in a controlled environment as input. The process starts with an input image or video of multiple or single plants over a bench. This can be captured automatically via an overhead camera or through other modalities installed in the indoor farming setup. If the input is an image, it proceeds to the next step of processing. If there is a video, then frames (1 frame per second) are extracted and then processed as image.

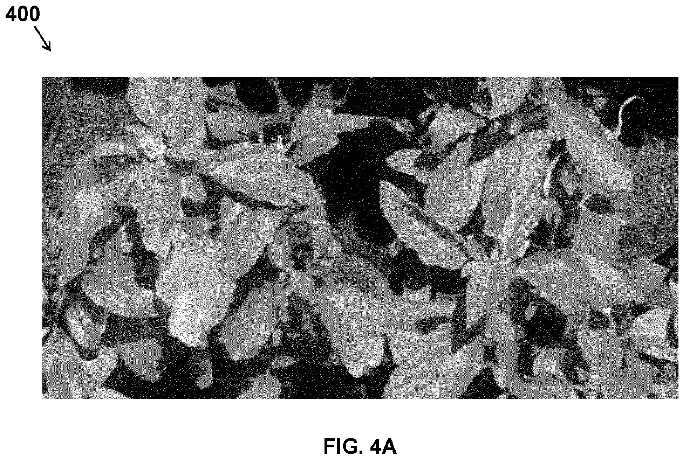

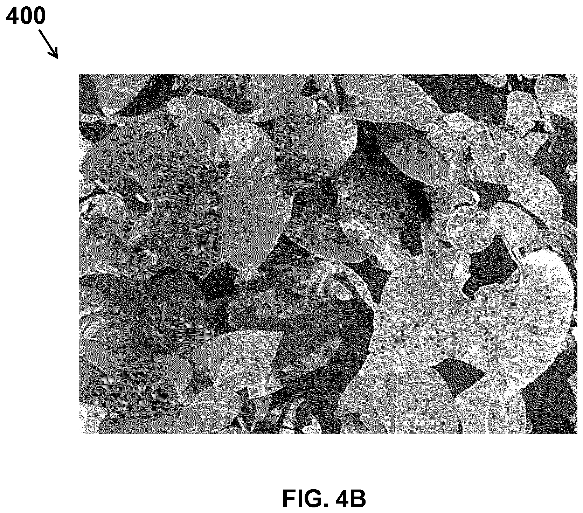

At the next step 304 of the processor-implemented method 300, the one or more hardware processors 108 are configured by the programmed instructions to pre-process the received plurality of images using a predefined Deep Learning (DL) technique to perform data homogenization and structural isolation followed by a pseudo-spectral signal extraction and waveform transformation to identify deviations indicative of phenotypic anomalies. The data homogeneity is in terms of image format, aspect ratio, resolution, and color consistency (RGB/BGR). The predefined deep learning based methods are used to extract individual leaves, plants and pots (if present) from the processed image and group them into two cases (1) plants and pots are separable, and (2) plants and pots are not separable, and leaves are overlapping as shown in FIG. 4A and FIG. 4B.

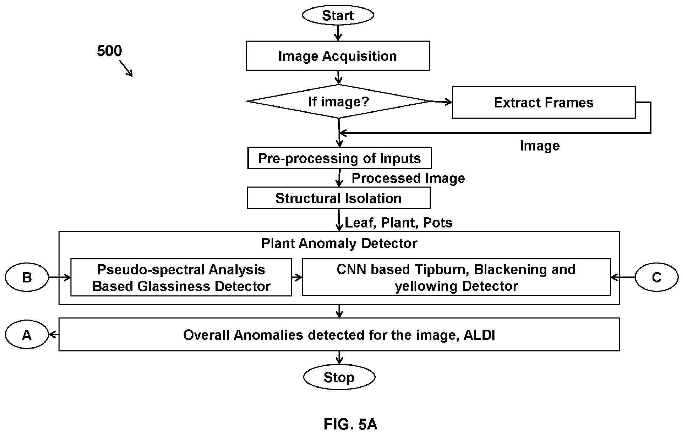

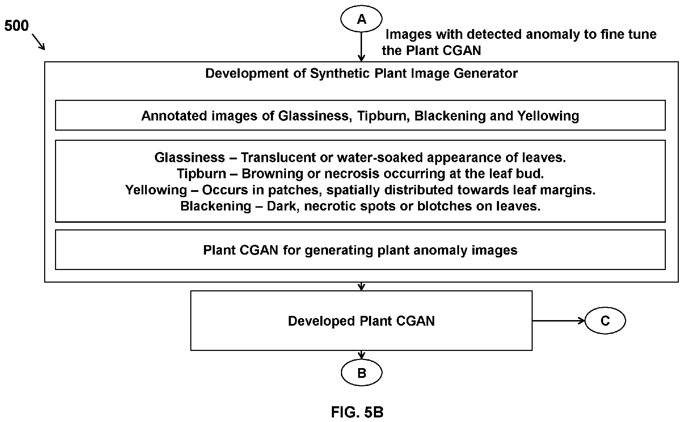

FIGS. 5A through 5B shows an overall block diagram to illustrate identification and localization of plant growth anomalies including glassiness, tipburn, blackening and yellowing, while estimating overlapping anomalies for multiple anomaly scenarios, according to some embodiments of the present disclosure. The received plurality of images is converted into grayscale for contrast and reducing noise using an image processing based smoothing technique. Regions of the received plurality of images are classified to detect objects comprising plants, pots and leaves using a Deep Learning (DL) based object detection technique. Further, the pre-processing of the received plurality of images includes generating bounding boxes for the detected objects to derive overlapping and non-overlapping region coordinates. The overlapping occurs when contours of leaves, plant regions significantly intersect in a spatial domain and segment out leaves of the one or more plants using a deep learning segmentation technique. Overlapping occurs when the distance between the bounding box of two entities/ regions *R*₁ and *R*₂ is below a certain threshold *T_{d},* overlapping in context of the bounding boxes can be defined by the below equation (1): $R = \left\{\left.{R}_{i}∈R\right|{Conf}_{i}>{T}_{c}\right\}$ Classify overlapping and non-overlapping regions for each pair of bounding boxes *Rᵢ*, and *Rⱼ* (*i*=*j*)*.* Calculate *d*(*Rᵢ,Rⱼ),* the distance between them, check the density *p*(*Rᵢ*) and *p*(*Rⱼ)* and determine overlap using the overlap classification formula in equation (2): $Overlap \left({R}_{i}, {R}_{j}\right) = \left\{\begin{matrix}1 , ifd \left({R}_{i}, {R}_{j}\right) < Td ∧ \left(ρ\left({R}_{i}\right)\geq Tρ∨ρ\left({R}_{j}\right)\geq Tρ\right) \\ 0 , otherwise\end{matrix}\right.$ wherein:
*R* = {*R*₁*, R*₂*,... R_{N}*}; detecting bounding boxes, each *Rᵢ=* [*xᵢ, yᵢ, wᵢ, hᵢ,* Conf*ᵢ*]
*T_{c}*: confidence threshold for filtering bounding boxes;
*T_{d}*: proximity threshold for determining overlap;
*T_{ρ}*: Density threshold for classifying overlapping regions;
Λ: Symbol for logical conjunction, which represents the AND operator;
V: Symbol for logical disjunction, which represents the OR operator.

For each overlapping pair (*Rᵢ, Rⱼ*)*,* compute the intersection region *I*(*Rᵢ, Rⱼ*)*.* $I \left({R}_{i}, {R}_{j}\right) = \left[max\left({x}_{i}, {x}_{j}\right),max\left({y}_{i}, {y}_{j}\right),min\left({x}_{i}+{w}_{i}{x}_{j}+{w}_{j}\right),min\left({y}_{i}+{h}_{i}{y}_{j}+{h}_{j}\right)\right]$ The intersection region *I*(*Ri, Rⱼ*) represents the coordinates of the overlapping region. For non-overlapping regions bounding boxes, retain their original coordinates *Rᵢ*

Output as bounding boxes of leaves with coordinates derived from *I*(*Rᵢ, Rⱼ*)*.* Output as bounding boxes of plants and pots with coordinates derived from Ri. The set of all overlapping regions is: ${I}_{overlap = \begin{matrix}i = 1 , j \neq 1 \\ i \neq j\end{matrix}} N \left\{\left.I\left({R}_{i}, {R}_{j}\right)\right|Overlap\left({R}_{i}, {R}_{j}\right)=1\right\}$ The set of all non-overlapping regions is: ${R}_{non - overlap = \left\{\left.{R}_{i}∈R\right|∀{R}_{j},Overlap\left({R}_{i}, {R}_{j}\right)=0\right\}}$

Further, a Convolutional Neural Network (CNN) model is used to identify if the leaves detected are at very early growth stage with small leaves. Moreover, the pre-processed plurality of images is transformed into a frequency domain to convert into a pseudo-spectral like waveform using a pseudo-spectral analysis based glassiness detector module.

At the next step 306 of the processor-implemented method 300, the one or more hardware processors 108 are configured by the programmed instructions to analyze the pre-processed plurality of images using an anomaly detector to identify one or more anomalies in the plants of the controlled environment. The identified one or more anomalies in the plants of the controlled environment are consumed by an Anomaly Layering Detection Index (ALDI) generator module to provide an index based on localization and layering of the one or more anomalies in the plants of the controlled environment. The one or more anomalies in the plants of the controlled environment include a glassiness, tip burn, blackening, and yellowing.

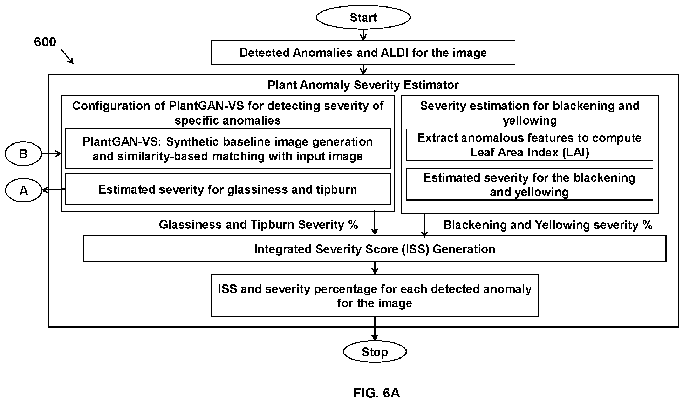

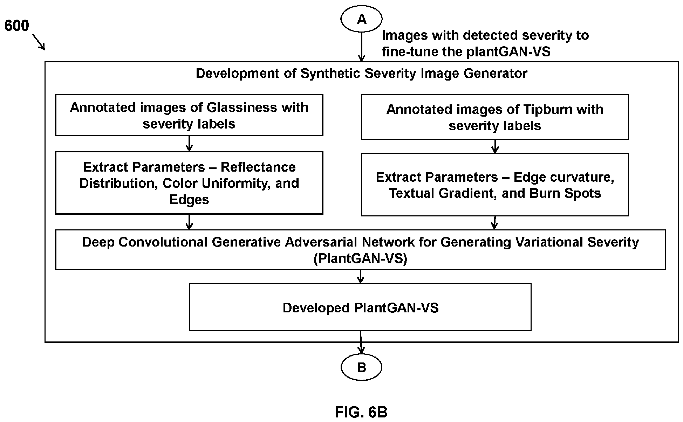

FIG. 6A through 6B shows an overall block diagram to illustrate estimating the anomaly severity by analyzing real-time data and dynamically generated synthetic baseline data for non-linear severity growth for plant anomalies like glassiness and tipburn, according to some embodiments of the present disclosure. The system 100 converts the image to Hue Saturation Value (HSV) color channel and extracts the V-channel from the converted HSV image, which represents the intensity of brightness in the image. The V-channel from the processed image is transformed into the frequency domain to convert into pseudo-spectral like waveform further processing using equation (6). $F \left(u, v\right) = {\sum }_{x = 0}^{M - 1} {\sum }_{y = 0}^{N - 1} V \left(x, y\right) . {e}^{- j 2 π \left(\frac{ux}{M}+\frac{vy}{N}\right)}$
wherein, *F*(*u, v*): The transformed frequency representation;
*V*(*x, y*): The intensity value of the V-channel at spatial coordinates (x, y);
*M, N:* dimensions of the image (height and width);
u, v: Frequency components in the horizontal and vertical directions;

Glassy areas exhibit high-frequency components due to sharp transitions in brightness, often caused by reflections or light scattering on the leaf surface. Non-glassy areas display lower-frequency components, representing smoother intensity transitions. The transition isolates these frequencies, allowing users to distinguish between glassy and non-glassy features. By working in the frequency domain, noise and subtle variations in intensity are more easily analyzed compared to the spatial domain. After obtaining *F*(*u, v*) the classification process for identifying glassy and non-glassy points involves frequency band segmentation, spatial re-mapping, and glassiness feature extraction.

In the frequency band segmentation, the frequency domain is segmented into a high frequency band and a low frequency band. The high frequency band indicative of sharp transitions, potential glassy points the low frequency bands indicative of smoother transitions, non-glassy points. The same is done by the following a filtering equation: ${F}_{filtered} \left(u, v\right) = \left\{\begin{matrix}F \left(u, v\right) , {ifλ}_{low} \leq \sqrt{{u}^{2} + {v}^{2}} \leq {λ}_{high} \\ 0 , otherwise\end{matrix}\right.$ wherein *λ_{low}* and *λ_{high}* are the frequency thresholds.

In the spatial re-mapping, the filtered is inversely transformed back to the spatial domain: ${V}_{filtered} \left(x, y\right) = {F}^{- 1} \left({F}_{filtered}\left(u, v\right)\right)$ This isolates the regions of interest in the original image corresponding to glassy or non-glassy areas.

In the glassiness feature extraction, using a statistical or morphological techniques to compute the energy in high-frequency bands for each region: $E = {\sum }_{u , v} {\left|{F}_{filtered}\left(u, v\right)\right|}^{2}$ wherein, glassy areas tend to have higher energy. Further, using a Grey-Level Co-occurrence matrix (GLCM) to analyze the texture of the filtered image to determine contrast: $Contrast = {\sum }_{i , j} P \left(i, j\right) {\left(i-j\right)}^{2}$ wherein, *P*(*i,j*) is the co-occurrence probability. Higher contrast indicates glassiness. A predefined convolutional neural network (CNN) model is trained using labelled data of glassy and non-glassy regions. Input to the predefined CNN model is frequency domain features, e.g., energy in high-frequency bands for each region, contrast, and spatial domain features i.e. variance and mean intensity. Output from the predefined CNN model is glassy points and non-glassy points. In the glassy points pixels and regions with high energy and contrast whereas in the non-glassy points the pixels or regions with low energy and smoother textures. The non-glassy regions are further classified as Yellowing, Tipburn or Blackening via the predefined convolutional neural network (CNN) model.

The anomaly layering detection index score evaluates bench health on a scale of 0 for healthy to a 100 for completely unhealthy or has one or more anomalies in scope by assessing anomalies in leaves and the one or more plants, factoring in the one or more anomalies, overlapping regions, empty pots and plant growth stages.

At the next step 308 of the processor-implemented method 300, the one or more hardware processors 108 are configured by the programmed instructions to estimate severity of each of the one or more anomalies in the plants of the controlled environment from values of the index using an anomaly severity estimator. wherein, a severity percentage is estimated using a predefined synthetic plant severity generation module. ALDI at image level score, considering all the leaves in the image in the bench are overlapping: $ALDI = \left(\frac{{N}_{anomalous}}{{N}_{leaves}}\sum {W}_{a} .100\right) + \left(\frac{{N}_{empty}}{{N}_{pots}}.50\right) - \left({P}_{small}.10\right)$
wherein, *Nₗₑₐᵥₑₛ* = Total number of leaves detected in the image;
*Nₐₙₒₘₐₗₒᵤₛ* = Total number of leaves detected with anomalies;
*Nₚₒₜₛ* = Total number of pots detected;
*Nₚₗₐₙₜₛ=* Total number of plants detected;
*N_{empty}=* Total number of empty pots detected;
*Wₐ* = Weight of anomalies for yellowing (*W_{y}*)*,* blackening (*W_{b}*)*,* tipburn (*Wₜ*)*,* and glassiness (*W_{g}*).
*Pₛₘₐₗₗ* = Proportion of pots detected with early-stage plant growth (small leaves).

If plants are distinguishable, the ALDI plant level score, considering all the leaves in the image in the bench: $ALDI = \frac{1}{{N}_{plants}} {\sum }_{i = 1}^{{N}_{plants}} \left[\left(\frac{{N}_{anomalous} , i}{{N}_{leaves} , i}\sum {W}_{a} .100\right)\right] + \left(\frac{{N}_{empty}}{{N}_{pots}}.50\right) - \left({P}_{small}.10\right)$ wherein, Σ *Wₐ = W_{y} + W_{b} + Wₜ + W_{g}*

The score reflects the proportion of leaves affected by each anomaly. The weights for can be adjusted based on the impact of the anomaly. Empty pots contribute to the ALDI score, penalizing cases where no plants are growing. Early-stage plants (small leaves) reduce the score penalty, acknowledging their developmental phase. In one example, considering weights like *W_{y} =* 1.0, *W_{b}* = 0.8, *Wₜ* = 0.6, *W_{g}* = 0.4. All leaves overlap, and plants cannot be distinguished. 50 leaves exhibit yellowing, blackening, tipburn, and glassiness out of 120 total leaves. $ALDI = \frac{50}{120} . \frac{\left(1.0\right) + \left(0.8\right) + \left(0.6\right) + \left(0.4\right)}{4} .100 + 0 = 29.17$ For Example:
5 pots and 4 plants detected:
Pot 1 - 1 empty pot.
Pot 2 - Plant 1: Tipburn + Glassiness on all leaves.
Pot 3 - Plant 2: Healthy.
Pot 4 - Plant 3: Glassiness on all leaves.
Pot 5 - Plant 4: Healthy $ALDI = \frac{1}{4} \left[\left(1.0\right)+\left(0\right)+\left(1.0\right)+\left(0\right)\right] .100 + \frac{1}{5} 50 - 0 = 60$

Finally at the end of feature-1, all anomalies detected for each image/ plant and ALDI score of the bench is provided as output for next the processing module.

In another embodiment, a predefined conditional generative adversarial network (CGAN) is used to generate synthetic plant images exhibiting yellowing, blackening, glassiness and tip burn, address data scarcity and ensure balanced data across all classes with realistic images at all points of time. A detailed architecture of the CGAN as follows:
1. Input Layer:
   - Noise Vector *z*: Random noise for diversity in image generation.
   - Condition Vector *c*: Encodes the specific anomaly type (yellowing, blackening, glassiness, tipbum).
2. Dense Layer:
   - Combines *z* and *c*, followed by Leaky Rectified Linear Unit (ReLU) activation.
3. Convolutional Blocks:
   - Upsampling through transposed convolutions, each followed by batch normalization and a Rectified Linear Unit (ReLU) activation.
4. Output Layer:
   - Convolution layer to generate an RGB image.
   - Activation: Tanh to normalize output to [-1, 1].

A detailed discriminator architecture of the CGAN as follows:
1. Input Layer:
   - Real or synthetic plant image concatenated with condition vector c.
2. Convolutional Blocks:
   - Series of strided convolutions with batch normalization and LeakyReLU activation.
3. Output Layer:
   - Fully connected layer with sigmoid activation to output probability of realness.

Input features to the CGAN and anomaly characteristics are as follows:

### 1. Yellowing:

- Feature: Gradual color shift from green to yellow in leaves.
- Characteristics: Occurs in patches, more prevalent on older leaves, spatially distributed towards leaf.
   margins.

### 2. Blackening:

- Feature: Dark, necrotic spots or blotches on leaves.
- Characteristics: Irregular shapes, often accompanied by shriveling, typically start at the tips or edges.

### 3. Glassiness:

- Feature: Translucent or water-soaked appearance of leaves.
- Characteristics: Affects the leaf uniformly, often leads to wilting, more prominent in humid conditions.

### 4. Tipburn:

- Feature: Browning or necrosis occurring at the leaf bud (growing tip of the plant), not on the fully
   developed leaf.
- Characteristics: Focused on the growing tips, can result in malformed new leaves, with a clear boundary between healthy and damaged tissue.

Feature specific loss functions of the CGAN below in equation (13): ${L}_{anomaly} = {\sum }_{i = 1}^{N} {λ}_{i} {\left‖{Φ}_{{anomaly}_{i}}\left(G\left(z, c\right)\right)-{Φ}_{{anomaly}_{i}}\left(x\right)\right‖}^{2}$
wherein *N*: number of specific anomalies (e.g. yellowing, blackening, glassiness, and tipbum);
*λᵢ*: weighting factor for the importance of each anomaly;
*Φ_{anomalyᵢ}*: feature extractor specific to each anomaly;
*G*(*z, c*): Output of the Generator network, conditioned on noise *z* and condition *c*.
*x*: real image from the dataset.
|| · ||²: L2 norm, measuring the difference between generated and real features.

This loss function penalizes the difference between features extracted from the generated image G (*z*, *c*) and the real image x for each anomaly type. Ensure that the generated images accurately replicate the characteristics of specific anomalies. A combined adversarial loss is: ${L}_{G} = - Ez ∼ pz \left[logD\left(G\left(z, c\right),c\right)\right]$ ${L}_{D} = - Ex ∼ pdata \left[logD\left(x, c\right)\right] - Ez ∼ pz \left[log\left(1-D\left(G\left(z, c\right),c\right)\right)\right]$
wherein, *L_{G}*: loss for the generator;
*L_{D}*: loss for the discriminator;
*D*(·): Discriminator output, distinguishing real from fake.
*p_{z}*: Distribution of the latent space z;
*p*_{data}: Distribution of real data.
Generator loss (*L_{G}*): ensure the generator produces images that the discriminator classifies as real;
Discriminator loss (*L_{D}*): Trains the discriminator to discriminator to distinguish real images from generated ones.

At the next step 310 of the processor-implemented method 300, the one or more hardware processors 108 are configured by the programmed instructions to combine the estimated severity for each of the one or more anomalies using an integrated severity score generation to get a final severity score for all identified anomalies. Wherein, an overall severity percentage is determined for a bench.

Development of Synthetic Severity Image Generator - PlantGAN-VS: Annotated images of glassiness and Tipburn with severity labels are used to extract parameters such as reflectance distribution, color uniformity, edges, and edge curvature, textual gradient, and burn spots. A deep convolutional generative adversarial network is used for generating a variational severity. The GAN architecture uses a deep convolutional generative adversarial network (DCGAN) to classify whether an image is real or generated. The DCGAN is trained using annotated images to iteratively improve generator and discriminator. The trained plantGAN-VS is capable of generating synthetic severity images for glassiness and tipburn anomalies.

The plantGAN-VS undergoes fine tuning after a set of 100 images have passed through the network using the images with the detected severity levels for the detected anomalies. Detected anomalies from the bench with the ALDI score are taken as input to an anomaly severity estimator. The PlantGAN-VS is trained in configured for detecting severity of specific severity. Glassiness is inherently diffused, may not localize and also will involve subtle changes in leaf texture. It often affects the leaf uniformly rather than in distinct patches. Tipburn primarily affects leaf buds, which are small and localized areas. Input as glassiness or tipburn anomaly which is present in the bench. Synthetic Baseline Image Generation using PlantGAN-VS for glassiness and tipburn of varying severity ranging from greater than 0% and less than or equal to 100%. Input anomaly with generated images is compared using Structural Similarity Index (SSIM) using the below equation (16) to determine the severity of the detected anomaly among Glassiness and Tipburn based the closest synthetic image: ${S}_{glassiness / tipburn} = arg {min}_{i} \left[SSIM\left({I}_{input}, {I}_{PlantGAN - VS , i}\right)\right]$
wherein, *S*_{*glassiness*/*tipburn*} = Detected severity percentage for Glassines or Tipburn;
*Iᵢₙₚᵤₜ* = Input image;
*I_{PlantGAN-VS,i}=* Generated synthetic image from PlantGAN-VS at severity level *i %*

Further, the total leaf and anomalous parts of the leaf are segmented out using a predefined deep learning based Single Shot Detection model to estimate blackening and yellowing severity. The anomaly severity for yellowing and blackening is computed based on an anomalous area ratio using the below equation (17): ${S}_{Blackening / yellowing} = \frac{{A}_{anomalous}}{{A}_{totalleaf}} \times 100$ wherein, *Aₐₙₒₘₐₗₒᵤₛ* = Area of the leaf having blackening or yellowing anomaly; *A_{totalleaf}* = Total segmented leaf area.

An Integrated Severity Score (ISS) generator quantifies the severity of plant anomalies within an image on a scale of 0 (no severity) to 100 (maximum severity). It integrates anomaly severity percentages for each condition (glassiness, yellowing, blackening, tipburn) and the ALDI score from feature-1, to provide a comprehensive severity index. Herein, inputs and variables are as follows:
1. *Sₐ*: Severity percentage for each anomaly a (glassiness, yellowing, blackening, tipburn) in detected
   leaves or plants.
   *S_{g}*: Glassiness severity
   *S_{y}*: Yellowing severity
   *S_{b}*: Blackening severity
   *Sₜ*: Tipburn severity
   2*. Nₗₑₐᵥₑₛ* : Total number of leaves detected in the image.
   3. *Nₐₙₒₘₐₗₒᵤₛ* : Total number of leaves detected with anomalies.
   4*. N_{healthy}*: Total healthy leaves in the image.
   5. ALDI: ALDI score calculated previously in feature-1.
   *6. Wₐ*: Weight of anomalies for yellowing (*W_{y}*)*,* blackening (*W_{b}*), tipburn
   (*Wₜ),* and glassiness (*W_{g}*)*.*
   7. ISS: Integrated Severity Score

In another embodiment, if plants cannot be distinguished, severity is aggregated at the image level: $ISS = \left(\frac{1}{{N}_{leaves}}{\sum }_{a} \left({S}_{a}.{W}_{a}\right) .100\right) + \left(\frac{ALDI}{100}.20\right)$

In another embodiment, wherein if plants can be segregated, severity is calculated for each plant, then averaged: $ISS = \frac{1}{{N}_{plants}} {\sum }_{i = 1}^{{N}_{plants}} \left(\frac{1}{{N}_{leaves , i}}{\sum }_{a} \left({S}_{a , i}.{W}_{a}\right) .100\right) + \left(\frac{ALDI}{100}.20\right)$ where $\sum {W}_{a} = {W}_{y} + {W}_{b} + {W}_{t} + {W}_{g}$
1. Severity contribution (*Sₐ*): Higher severity percentages will result in higher contributions to the ISS.
2. Weighting (*Wₐ*): More impactful anomalies can be given higher weights. This is done to balance severity calculated from specific conditions with overall health (via ALDI). Adjusting this weight could shift the emphasis on ALDI's role in ISSG.
3. 3. ALDI Factor: The ALDI score adds a secondary dimension, increasing the ISS score for overall poor health. ALDI is a health indicator ranging from 0 to 100. Its contribution to ISS represents the general health or anomaly presence in the entire image. Multiplying by 20 ensures that ALDI's impact on ISSG is capped at 20% of the maximum ISS score (100). This scaling avoids ALDI dominating the ISSG calculation while still reflecting its importance

When plants are segregated, severity is calculated per plant for granularity. Otherwise, leaf-level severity is used. For example, wherein all leaves overlap, plants cannot be distinguished:
Tipburn, *Sₜ* = 50%, Glassiness, *S_{g}* = 28%, and healthy leaves = 72%.
Weights considered: *W_{y} =* 1.0, *W_{b}* = 0.8, *Wₜ* = 0.6, *W_{g}* = 0.4. $ISS = \left(\frac{0.5 ⋅ 0.6 + 0.28 ⋅ 0.4}{1}⋅100\right) + \left(\frac{28}{100}⋅20\right) = 41.2$

In another example, wherein 4 plants are detected with pots:
Plant 1: Glassiness (*S_{g}* = 22%), Blackening (*S_{b}* = 40%).
Plant 2: Tipburn (*Sₜ* = 18%), Glassiness (*S_{g}*) = 34%.
Plant 3: Glassiness (*S_{g}* = 90%).
Plant 4: Yellowing (*S_{y}* = 36%). ${Severity}_{1} = \frac{0.5 ⋅ 0.6 + 0.28 ⋅ 0.4}{1} ⋅ 100 = \left(0.08+0.344\right) ⋅ 100 = 43.2$ ${Severity}_{2} = \frac{0.18 ⋅ 0.6 + 0.34 ⋅ 0.4}{1} ⋅ 100 = \left(0.108+0.136\right) ⋅ 100 = 24.4$ $ISS = \frac{43.2 + 24.4 + 23 + 36}{1} + \left(\frac{88}{100}⋅20\right) = 31.65 + 17.6 = 49.25$
The output of feature-2 is ISS along with severity percentage for each detected anomaly for the image.

At the next step 312 of the processor-implemented method 300, the one or more hardware processors 108 are configured by the programmed instructions to analyze the identified one or more anomalies and the overall severity percentage to determine a potential root cause and a possibility ranking of causal factors via a predefined Root Cause Analysis and Ranking (RCAR) module. The system is configured for the root cause analysis with prioritized rankings, severity zone mapping, severity trend estimation, and tailored role-specific insights to enable effective decision-making and targeted interventions in plant farming environments.

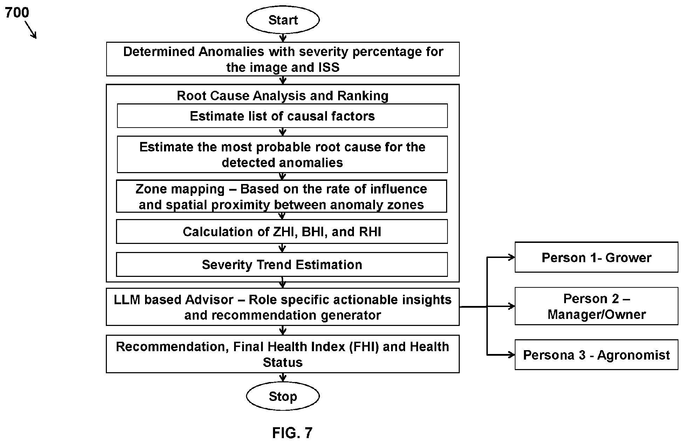

FIG. 7 shows an overall block diagram for root cause analysis with prioritized rankings, severity zone mapping, severity trend estimation, and tailored role-specific insights to enable effective decision-making and targeted interventions in plant farming environments, according to some embodiments of the present disclosure. The system identifies and ranks potential root causes of plant-specific stress symptoms along with providing a final zone, bench and rack health index and overall health status. The system estimates a list of causal factors, and the most probable root cause for the detected anomalies. Based on the rate of influence and spatial proximity between anomaly zones, the system identifies zone mapping.

Rank root causes for the detected anomalies based on likelihood, accounting for probabilities of co-occurring anomalies. It is a structured framework designed to analyze the detected anomalies and their severities from prior claims, determine the most probable causal factors behind those anomalies, provide insights at both the zone and rack levels for actionable recommendations, rank potential root causes and map zones to identify localized problems and infer systemic issues.

RCAR Details - Aggregated score reflecting an anomaly prevalence from Integrated Severity Score (ISS) such as ISS% per plant (if distinguishable) and ISS% for the image (if overlapping) and individual anomaly severities percentages (e.g., yellowing 10%, blackening 30%) are input to the Root Cause Analysis and Ranking (RCAR).

Expected output of the RCAR is a probable conditions associated with detected anomalies, prioritized list of root causes with confidence percentages, Highest-to-lowest severity zones with respective image coordinates, Insights on systemic issues (e.g., shared resource impact), Health status of the entire bench or image (0 to 100 scale) and a comprehensive report for grower, agronomist, or manager personas via a predefined large language model (LLM).

Methodology: Likelihood estimation - Ranking of causal factors with probabilities: For each anomaly *Aᵢ*, Probability of a causal factor (*Cⱼ*) given anomaly *Aᵢ*: $P \left(\left.{C}_{j}\right|Anomalies\right) = 1 - {\prod }_{i = 1}^{n} \left(1-P\left(\left.{C}_{j}\right|{A}_{i}\right)\right)$

wherein terms and variables are:
*Cⱼ*: A specific causal factor (e.g., Nutrient deficiency).
*Aᵢ:* A specific anomaly (e.g., Tipburn).
*P*(*Cⱼ*l*Aᵢ*): The probability that *Cⱼ* is the cause of the anomaly *Aᵢ*.
*P*(*Cⱼ*|*Anomalies*): The overall probability that *Cⱼ* is the root cause for multiple detected anomalies combined.

The equation is a probabilistic model to estimate the likelihood of a causal factor *Cⱼ* being responsible for a set of detected anomalies. This methodology assumes that each anomaly *Aᵢ* contributes independently to the likelihood of a causal factor *Cⱼ*, and these probabilities are aggregated in a way that accounts for the cumulative effect of multiple anomalies.

Individual contribution from Anomalies: each anomaly *Aᵢ* contributes a conditional probability *P*(*Cⱼ*|*Aᵢ*)*,* which indicates how likely *Cⱼ* is the cause of *Aᵢ*. For example: $Tip burn : P \left(\left.calcium deficiency\right|Tipburn\right) = 50 % .$ $Glassines : P \left(\left.Excess Nitrogen\right|Glassines\right) = 70 % .$

Complementary Probability: The complimentary probability for each anomaly *Aᵢ* is (1 *- P*(*Cⱼ*|*Aᵢ*)). This represents the likelihood that *Cⱼ* is not responsible for *Aᵢ*. For example:
For tip burn: (1-*P* (Calcium deficiency | Tipbum)) = 1-0.5 = 0.5 or 50%
For glassiness: (1-*P* (excess nitrogen | Glssiness)) = 1-0.7 = 0.3 or 30%.

Combined Probability of Independence- where each anomaly contributes independently to *Cⱼ,* the joint probability that *Cⱼ* is not the cause for any anomaly is: ${\prod }_{i = 1}^{n} \left(1-P\left(\left.{C}_{j}\right|{A}_{i}\right)\right)$
For two anomalies (e.g. tipburn and glassiness), this would be: $\left(1-P\left(\left.{C}_{j}\right|{A}_{i}\right)\right) \times \left(1-P\left(\left.{C}_{j}\right|{A}_{2}\right)\right)$
For example: $\left(1-0.5\right) \times \left(1-0.7\right) = 0.5 \times 0.3 = 0.15 or 15 %$

Complement of combined probability: The likelihood that *Cⱼ* is the root cause for at least one of the anomalies is the complement of the above product: $P \left(\left.{C}_{j}\right|Anomalies\right) = 1 - {\prod }_{i = 1}^{n} \left(1-P\left(\left.{C}_{j}\right|{A}_{i}\right)\right)$ For example: $P \left(\left.{C}_{j}\right|Anomalies\right) = 1 - 0.15 = 0.85 or 85 %$

Each anomaly contributes independently to the likelihood of the causal factor. The equation accounts for the cumulative effect of multiple anomalies on a single causal factor. The model relies on pre-calculated probabilities *P*(*Cⱼ*|*Aᵢ*) from empirical or reference data. The potential control measures are as follows:
A. **Nutrient Deficiency (Yellowing):** To adjust nutrient solution (increase nitrogen). To apply foliar sprays with micronutrients.
B. **Overwatering (Yellowing, Blackening):** To Improve drainage. To reduce watering frequency.
C. **Underwatering (Tipburn, Yellowing):** To increase watering frequency. To use mulching to retain moisture in the bench.
D. **High Humidity (Glassiness, Blackening):** To increase air circulation with fans. To use dehumidifiers to lower humidity levels.
E. **Low Light (Yellowing):** To increase light intensity by adding more grow lights. To extend the photo period to ensure adequate light exposure.
F. **Temperature Stress (Tipburn, Glassiness):** Adjust HVAC (Heating, Ventilation and Air Conditioning) settings to maintain optimal temperature. To use shading during peak heat to reduce thermal stress.

At the next step 314 of the processor-implemented method 300, the one or more hardware processors 108 are configured by the programmed instructions to calculate a Zone Health Index (ZHI), Bench Health Index (BHI), Rack Health Index (RHI), and a severity trend to analyze progress of the severities over time using a predefined deep learning model, wherein temporal and environmental features are combined for predicting the severity trend for the one or more plants.

The zone mapping module takes input data from anomaly severities, causal factors, bounding boxes, and overlapping information, to define zones. The methodology balances spatial contiguity and anomaly clustering to optimize the grouping process. The input variables for the zone mapping module are as follows:
1. Image dimension: *H* (height), *W* (width).
2. ISS: Integrated Severity Score for the entire image.
3. Anomaly Severity Scores: *Sₐ*(*z*), severity of anomaly *a* in zone*z*.
4. Causal Factors: *CFₐ*(*z*)*,* causal factor weights for anomaly *a* in zone *z*.
5. Plant information:
   Bounding Boxes: *BBᵢ* = (*x_{min,} yₘᵢₙ, xₘₐₓ, yₘₐₓ*) for detected plants or leaves.
   Overlap Information: *Oᵢ* is 1 if overlapping, 0 otherwise.

Key objectives of the zone mapping module are to group similar anomalies, spatial coverage, and flexibility in zone size. Firstly, a zone quality functions are defined to determine the fitness of a given zone: $Q \left(z\right) = {\sum }_{a} \left({w}_{a}⋅{S}_{a}\left(z\right)\right) + λ ⋅ ISS \left(z\right)$
*wₐ*: weight of anomaly *a* is based on its importance;
*λ*: weight for the ISS contribution.

For bounding boxes *BBᵢ,* the system defines spatial distance: $d \left(i, j\right) = \sqrt{{\left({x}_{i}-{x}_{j}\right)}^{2} + {\left({y}_{i}-{y}_{j}\right)}^{2}}$
If *d(i,j)* ≤ *ZT_{d}* (threshold distance), group them into the same zone. For detected features, using a predefined machine learning model to cluster bounding boxes *BBᵢ,* based on anomaly severity *Sₐ* and causal factor *CFₐ.* Clustering metric: $D \left(i, j\right) = α ⋅ d \left(i, j\right) + β ⋅ \left|{S}_{a}\left(i\right)-{S}_{a}\left(j\right)\right| + γ ⋅ \left|{CF}_{a}\left(i\right)-{CF}_{a}\left(j\right)\right|$
wherein *α, β, γ*: weighting factors for distance, severity, and causal similarity. Further, for each cluster, derive the zone boundary: ${Z}_{k} = \left(x min i ∈ {C}_{k} min, y min i ∈ {C}_{k} min, x max i ∈ {C}_{k} max, y max i ∈ {C}_{k} max\right)$

If clusters have mixed anomalies, split clusters into sub-zones based on spatial continuity using Voronoi partitioning over *BBᵢ.* Sub-zone *Z_{k,l}* inherit Q(z) proportionally. The output of the zone mapping module will be determined by clustering results. ${Z}_{k} = \left({x}_{min}, {y}_{min}, {x}_{max}, {y}_{max}\right) ∀ k = 1 , 2 , … , N$

The Zone Health Index (ZHI) is a measure of the overall health of a specific zone within an image or growing area. It evaluates the weighted severity of anomalies in that zone and integrates the ISS (Integrated Severity Score) for hierarchical consistency. If ZHI is higher, the zone is healthier with fewer or less severe anomalies and if ZHI is lower, the zone is unhealthy with more severe anomalies. ${ZHI}_{k} = \left(100-\frac{{\sum }_{i = 1}^{n} \left({S}_{i , k}⋅{w}_{i}\right)}{{\sum }_{i = 1}^{n} {w}_{i}}\right) \times \left(\frac{100 - ISS}{100}\right)$
wherein, *S_{i,k}*: severity percentage of anomaly *i* in zone *k*;
*wᵢ*: weight assigned to anomaly *i* (critical anomalies have higher weights);
*n:* total number of anomalies in zone *k*;
*ISS:* Integrated severity score, expressed as a percentage (global severity for the image).

The Bench Health Index (BHI) is the overall health score for a bench. It aggregates the ZHI values of all zones on the bench, with higher BHI values indicating healthier conditions across the bench. BHI is higher if benches have overall better health and fewer critical issues, and BHI is lower if benches have overall worse health and require intervention. $BHI = \frac{{\sum }_{k = 1}^{m} \left({ZHI}_{k}⋅{A}_{k}\right)}{{\sum }_{k = 1}^{m} {A}_{k}}$
wherein, *ZHI_{K}*: Zone Health Index for zone *k.*
*Aₖ*: Area of zone *k* (used for area-weighted aggregation)
*m:* total number of zones in the bench.

To recommend actions for the rack level, zone-level and image-level data is aggregated while considering patterns like clustering of anomalies in specific zones or shared resources. The RHI aggregates BHIs for all benches in a rack, adjusted by causal probabilities *Pⱼ*, from the RCAR module to account for shared resource issues: $RHI = \frac{{\sum }_{j = 1}^{k} \left({BHI}_{j}⋅{P}_{j}\right)}{{\sum }_{j = 1}^{k} {P}_{j}}$
wherein, *BHIⱼ* is Bench Health Index for bench *j*;
*Pⱼ* is probability of shared resource issues for bench *j* (derived from RCAR);
*k* is the total number of benches in the rack.

The use of probability of shared resource issues for bench *Pⱼ* helps to weigh the BHI by the likelihood of shared issues across the bench, ensuring that systematic issues affecting multiple zones or benches are appropriately highlighted. The RHI provides a comprehensive view of the rack's health, incorporating both the individual zone severities (via ZHI) and bench-level aggregations (via BHI).

Severity Trend Estimation: A Deep Learning model combining temporal and environmental features for predicting the severity trend over 7 days for each of the one or more plants was developed. The model integrates historical severity data, ambient temperature, and management activities to generate reliable future predictions. Input to the predefined deep learning model is each zone's severity percentage for a given timestamp, daily average temperature for each timestamp and encoded activities applied to each of the one or more plants. Herein, the severity data and temperature values are normalized, and management activities are encoded into embeddings. All the inputs are combined into a multi-dimensional tensor: $X = \left\{S, T, A\right\}$ wherein, *S* is severity, *T* is temperature, and *A* is management activities.

Further, a neural network (NN) is utilized to model temporal dependencies in the data and the historical trend of severity for each zone is captured. Severity trends are predicted for each zone using a combination of past data and external factors. The rate of change of severity over time for each zone is: ${SCR}_{z} \left(t\right) = \frac{{Severity}_{z} \left(t+1\right) - {Severity}_{z} \left(t\right)}{Δ t}$ Where *t* is the timestamp, and z is the zone index. Normalized severity is: ${NormalizedSeverity}_{z} \left(t\right) = \frac{{Severity}_{z} \left(t\right) - {μ}_{s}}{{σ}_{s}}$ where *µₛ* is the mean severity, and *σₛ* is the standard deviation.

Input representation for the neural network combines the severity temperature and management activities features into a single vector for each time step: ${X}_{t} = \left[{S}_{z}\left(t\right),T\left(t\right),A\left(t\right)\right]$
wherein, *Xₜ*: Input feature matrix for the model at time *t.*
*S_{z}*(*t*): Severity score for zone *z* at time *t*.
*T*(*t*): Ambient temperature at time *t.*
*A*(*t*): Management activity taken at time.

The neural network (NN) outputs predictions for each zone's severity trend: ${Y}_{z} \left(t\right) = {NN}_{θ} \left({X}_{z}\left(t\right),{h}_{t - 1}\right)$
wherein *h*_{*t*-1}, is the hidden state from the previous timestep
*X_{z}*(*t*) = Input feature matrix for zone *z* for the model at time *t.*
*Y_{z}*(*t*): Predicted severity score for zone *z* at time *t.*
*θ* : Trainable parameters of the Neural Network (NN).

Forecasting for 7 days iteratively predict the next 7 days using: ${Y}_{z} \left(t+n\right) = f \left({Y}_{z}\left(t+n-1\right),T\left(t+n-1\right),A\left(t+n-1\right)\right)$ where *f* is a trained NN model and n ranges 1 to 7 here. The NN model architecture is:
1. Input Layer: Takes severity, temperature, and activities as inputs.
2. Middle Layer: Captures temporal dependencies over past timestamps.
3. Dense Layer: Outputs severity predictions for the next 7 days.
4. Loss Function: Mean Squared Error (MSE) between predicted severity and actual severity:
$Loss = \frac{1}{N} {\sum }_{i = 1}^{N} {\left({Y}_{true , i}-{Y}_{pred , i}\right)}^{2}$

Finally, at the last step 316 of the processor-implemented method 300, the one or more hardware processors 108 are configured by the programmed instructions to generate a persona based comprehensive recommendation of final health index (FHI) based on the calculated ZHI, BHI, RHI, and the severity trend for improving plant health using a predefined Large Language Model (LLM) based advisor module.

The LLM based Advisor module processes structured input data (precomputed metrics such as ISS, ALDI, ZHI, BHI, RHI, RCAR) and generates persona-specific outputs. Its core function is to structure and tailor the recommendations to meet the priorities of Growers, Owners/Managers, and Agronomists. Inputs to the LLM based advisor module are zone IDs with detected anomalies, highest causal factors, and aggregated insights at the rack level based on zone data. Key components of the LLM based advisor module architecture include an input layer, a processing layer, an LLM based context customization layer, and an output layer. The input layer includes:
1. Zone IDs with Detected Anomalies: Includes severity and location-specific data. An example input is Zone 1: Tipburn (50%), Yellowing (20%).
2. Highest Causal Factors: Input Example: Calcium deficiency (Zone 1, Zone 2)
3. Rack-Level Recommendations: Aggregated insights at the rack level based on zone data.

The processing layer of the LLM based plant advisor module includes:
A. Persona-specific weighting module - assign important weights *Wⱼ* for each persona *j*; *j=* Grower, Owner, Agronomist. Weight adjusts the granularity and focus of recommendations: ${W}_{j} = \left\{{w}_{a 1},{w}_{a 2},…,{w}_{an}\right\}$ wherein *wₐᵢ* is weight for anomaly *a* for persona *j*. For example, agronomists receive more detailed anomaly diagnostics than Grower.
B. Recommendation Structuring - Persona-specific priority scoring: ${P}_{j} \left(z\right) = {\sum }_{i = 1}^{n} {w}_{ai} ⋅ {A}_{i} \left(z\right)$
   wherein *Aᵢ*(*z*) is severity of anomaly *i* in zone *z*.
   *Pⱼ*(*z*) is priority score for persona *j* for zone *z*.
   Rack-level aggregation for cross-zone analysis: ${R}_{j} = \frac{{\sum }_{z ∈ Z} {P}_{j} \left(z\right)}{\left|Z\right|}$ wherein *Rⱼ*: aggregated rack-level insights for persona *j*.

The inputs are encoded into structured prompts specific to each persona by the LLM based context customization layer:${C}_{j} = Concat \left(\begin{matrix}ZoneData , Anomaliesseverities , \\ CasualFactors , RackInsights , PersonalWeighting\end{matrix}\right)$ Example prompt for Agronomist: "Zone 1 shows tipburn (50%) due to calcium deficiency. Adjacent zones 2 and 3 exhibit similar patterns. Rack-level insights suggest irrigation inconsistencies."

Output Generation: The LLM dynamically structures outputs with varying detailed levels.
**1. Grower Output:** High-level, action-oriented, minimal technical details. For example: "Zone 1 has tipburn (50%). Apply calcium-rich foliar spray."
**2. Owner/Manager Output:** Balances actionable insights with ROI and yield-related data.
   For example: "Addressing calcium deficiencies could improve yield by 10% in Rack A."
**3. Agronomist Output:** Detailed technical insights with verbose causal explanations.
   For example: "Zone 1 exhibits tipburn caused by calcium deficiency. Soil pH test indicates potential nutrient lockout. Consider adjusting irrigation schedules."

Output Layer: The outputs are persona-specific recommendations tailored to their goals:
**1. Grower:** Actionable steps to improve plant health and mitigate anomalies. For example: Zone 3 has glassiness (40%). Adjust humidity to 60% and monitor leaf texture weekly.
**2. Owner/Manager:** ROI and yield improvement suggestions.
   For example: Optimizing Zone 1's nutrient delivery could reduce yellowing and boost yield by 5% in Rack A.
**3. Agronomist:** Detailed anomaly diagnostics and suggestions.
   For example: Tipburn in Zone 1 correlates with high EC levels in soil. Conduct a root-zone calcium absorption test and adjust irrigation frequency.

Finally, the output for the Agronomist is a detailed technical insights with verbose causal explanations. A detailed anomaly diagnostics and suggestions. For example, Zone 1 exhibits tip burn caused by calcium deficiency. Soil pH test indicates potential nutrient lockout. Consider adjusting irrigation schedules. Tip burn in Zone 1 correlates with high EC levels in soil. Conduct a root-zone calcium absorption test and adjust irrigation frequency.

The Final Health Index (FHI) is computed by combining the Zone Health Index (ZHI), Bench Health Index (BHI), and Rack Health Index (RHI) to provide an overall assessment of the health status of the plantation. The FHI can be calculated using a weighted average of ZHI, BHI, and RHI, as follows: $FHI = {w}_{1} Z {H}^{˜} I + {w}_{2} B {H}^{˜} I + {w}_{3} RHI$ wherein, *w*₁, *w*₂, *w*₃ are weighting factors for ZHI, BHI, and RHI respectively, reflecting their importance in the overall health assessment. Also, *w*₁+ *w*₂*+ w*₃ =1. *ZH̃I* and *BH̃I* are average values of Zone Health Index and Bench Health Index along with the Rack Health Index. Range of FHI is 0 to 100. Average ZHI is calculated by taking the mean of all *ZHI* values across different zones in the system: $Z {H}^{˜} I = \frac{{\sum }_{i = 1}^{n} {ZHI}_{i}}{n}$ where n is the total number of zones. Average *BHI* is calculated similarly by taking the mean of all BHI values across benches: $B {H}^{˜} I = \frac{{\sum }_{i = 1}^{m} {BHI}_{i}}{m}$ wherein *m* is the total number of benches.

Health status ranges:
Healthy: *FHI* ≥ 85%
Moderate Healthy: 70% ≤ *FHI* < 85%
Fair: 55% ≤ *FHI <* 70%
Poor: 40% ≤ *FHI <* 55%
Critical: *FHI <* 40%

### Experiment:

### Feature 1: Anomaly Detection and ALDI Score Calculation

1. Structural Isolation:
   Output: Segmented regions of overlapping and non-overlapping regions.
2. Anomaly Detection:
   Detected Anomalies: Tipburn, glassiness, yellowing.
3. ALDI (Anomaly Level Detection Index) Score Calculation:
   Total anomalies = 3
   ALDI = 45.38

### Feature 2: Severity Estimation and ISS Calculation

1. Severity Estimation for Each Anomaly:
   Input: Anomalies from Feature 1.
   Output:
      Tipburn: 30%
      Glassiness: 25%
      Yellowing: 20%
2. ISS (Integrated Severity Score) Calculation:
   Weights:
      Tipburn: 0.4
      Glassiness: 0.35
      Yellowing: 0.25
   ISS = 25.42

### Feature 3: Zoning, Health Indexes, and Persona-Based Insights

1. RCAR and Root Causes:
   Root Causes Identified: High humidity and nutrient imbalance.
2. Zone Division:
   Output: 3 zones with specific severity levels.
3. Zone Health Index (ZHI) Calculation:
   Zone 1: 50%
   Zone 2: 55%
   Zone 3: 70%
4. Bench Health Index (BHI) Calculation: BHI = 60 %
5. RHI and Rack Level Recommendations:
   RHI = 68%
   Observation: Zones 1 and 2 have similar anomalies (tipburn, glassiness).
   Recommendation: Investigate environmental conditions (humidity, light) across the rack.
6. Based on severity data, ambient temperature, and management activities, the severity trend for the three zones over the next 7 days is estimated as follows:
   - Zone 1 has the highest severity trend, peaking on Day 4 (59.71), likely due to a combination of high temperature and reduced management effectiveness.

   Zone 2 follows a similar increasing pattern, peaking on Day 4 (47.14).
   Zone 3 remains lower but still rises steadily, reaching 37.71 on Day 4. Effective management interventions (e.g., humidity control, nutrient adjustments) can help reduce these severity trends.
7. LLM based plant advisor module for Persona Insights:
   1. Grower: Apply calcium-rich foliar spray to Zone 3. Monitor zones 1 and 2 for similar symptoms.
   2. Owner/Manager: Reducing calcium deficiency across Rack A can improve ROI by 8% and yield by 10%.
   3. Agronomist: Calcium deficiency in Zone 3 shows nutrient lockout. Adjust irrigation schedules and limit humidity to 60% and monitor leaf texture weekly in Zone 1 and 2.

   Final Health Index, FHI = 70%
   Health Status - Moderately Healthy

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of precise and scalable anomaly detection, anomaly severity estimation, and trend analysis for plants within controlled environments. Embodiments herein provide a method and system for estimating severity and causality for plant development anomalies in plants in a controlled environment. The system uses RGB image based analysis to identify subtle, similar looking growth anomalies and timely corrective actions. System estimates anomaly severity by analyzing real-time data and dynamically generated synthetic baseline data for non-linear severity growth for plant anomalies. The system performs root cause analysis with prioritized rankings, severity zone mapping, severity trend estimation, and tailored role-specific insights to enable effective decision-making and targeted interventions in plant farming environments. Finally, the system identifies and ranks potential root causes of plant-specific stress symptoms along with providing a final zone, bench and rack health index and overall health status.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
receiving (302), via an Input/Output (I/O) interface, a plurality of images of one or more plants in a controlled environment as input;
pre-processing (304), via the one or more hardware processors, the received plurality of images using a predefined deep learning technique to perform data homogenization and structural isolation followed by a pseudo-spectral signal extraction and waveform transformation to identify deviations indicative of phenotypic anomalies;
analyzing (306), via one or more hardware processors, the pre-processed plurality of images using an anomaly detector to identify one or more anomalies in each of the one or more plants, wherein the identified one or more anomalies in each of the one or more plants are consumed by an Anomaly Layering Detection Index (ALDI) generator module to provide an index based on localization and layering of the one or more anomalies in each of the one or more plants;
estimating (308), via the one or more hardware processors, severity of each of the one or more anomalies in the one or more plants from values of the index using an anomaly severity estimator, wherein a severity percentage is estimated using a predefined synthetic severity generation module;
combining (310), via the one or more hardware processors, the estimated severity for each of the one or more anomalies using an integrated severity score generator to get a final severity score for the one or more identified one or more anomalies, wherein an overall severity percentage is determined for a bench;
analyzing (312), via the one or more hardware processors, the identified one or more anomalies and the overall severity percentage to determine a potential root cause and a possibility ranking of causal factors via a predefined Root Cause Analysis and Ranking (RCAR) module;
calculating (314), via the one or more hardware processors, a Zone Health Index (ZHI), Bench Health Index (BHI), Rack Health Index (RHI), and a severity trend to analyze progress of the severities over time using a predefined deep learning model, wherein temporal and environmental features are combined for predicting the severity trend for each of the one or more plants in the controlled environment; and
generating (316), via the one or more hardware processors, a persona based comprehensive recommendation of final health index (FHI) based on the calculated ZHI, BHI, RHI, and a severity trend for improving plant health using a predefined large language model (LLM) based advisor module.

2. The processor-implemented method (300) as claimed in claim 1, wherein pre-processing comprising:
converting the received plurality of images to grayscale for contrast and reducing noise using an image processing based smoothing technique;
classifying regions of the received plurality of images to detect objects comprising the one or more plants, pots and leaves using a deep learning based object detection technique and generating bounding boxes for the detected objects, wherein overlapping and non-overlapping region coordinates are derived, and wherein overlapping occurs when contours of leaves, plant regions significantly intersect in a spatial domain; and
segmenting out leaves of the one or more plants using a predefined deep learning segmentation technique, wherein a predefined Convolutional Neural Network (CNN) model is used to identify if the leaves detected are at very early growth stage with small leaves.

3. The processor-implemented method (300) as claimed in claim 1, wherein the pre-processed plurality of images is transformed to a frequency domain to convert into a pseudospectral like waveform using a pseudospectral analysis based glassiness detector module.

4. The processor-implemented method (300) as claimed in claim 1, wherein the anomaly layering detection index-score evaluates health of the one or more plants on the bench on a scale of 0 for healthy to a 100 completely unhealthy or has one or more anomalies in scope by assessing anomalies in the leaves and the one or more plants, factoring in the one or more anomalies, overlapping regions, empty pots and plant growth stages.

5. The processor-implemented method (300) as claimed in claim 1, wherein a predefined conditional generative adversarial network (CGAN) is used to generate synthetic plant images exhibiting yellowing, blackening, glassiness and tip burn, address data scarcity and ensure balanced data across all classes with realistic images at all points of time.

6. The processor-implemented method (300) as claimed in claim 1, wherein a synthetic severity image generator focuses on feature preservation comprising reflectance distribution, color uniformity, and edges for glassiness condition and edge curvature, textural gradient, and burn spots for tip burn condition.

7. The processor-implemented method (300) as claimed in claim 1, wherein the one or more anomalies include a glassiness, a tip burn, a blackening, and a yellowing.

8. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
receive, via an Input/Output (I/O) interface, a plurality of images of one or more plants in a controlled environment as input;
pre-process the received plurality of images using a predefined deep learning technique to perform data homogenization and structural isolation followed by a pseudo-spectral signal extraction and waveform transformation to identify deviations indicative of phenotypic anomalies;
analyze the pre-processed plurality of images using an anomaly detector to identify one or more anomalies in each of the one or more plants, wherein the identified one or more anomalies in each of the one or more plants are consumed by an Anomaly Layering Detection Index (ALDI) generator module to provide an index based on localization and layering of the one or more anomalies in each of the one or more plants;
estimate severity of each of the one or more anomalies in the one or more plants from values of the index using an anomaly severity estimator, wherein a severity percentage is estimated using a predefined synthetic severity generation module;
combine the estimated severity for each of the one or more anomalies using an integrated severity score generation to get a final severity score for the one or more identified one or more anomalies, wherein an overall severity percentage is determined for a bench;
analyze the identified one or more anomalies and the overall severity percentage to determine a potential root cause and a possibility ranking of causal factors via a predefined Root Cause Analysis and Ranking (RCAR) module;
calculate a Zone Health Index (ZHI), Bench Health Index (BHI), Rack Health Index (RHI), and a severity trend to analyze progress of the severities over time using a predefined deep learning model, wherein temporal and environmental features are combined for predicting the severity trend for each of the one or more plants in the controlled environment;
generate a persona based comprehensive recommendation of final health index (FHI) based on the calculated ZHI, BHI, RHI, and a severity trend for improving plant health using a predefined large language model (LLM) based advisor module.

9. The system (100) as claimed in claim 8, wherein pre-processing comprises:
converting the received plurality of images to grayscale for contrast and reducing noise using an image processing based smoothing technique;
classifying regions of the received plurality of images to detect objects comprising the one or more plants, pots and leaves using a deep learning based object detection technique and generating bounding boxes for the detected objects, wherein overlapping and non-overlapping region coordinates are derived, and wherein overlapping occurs when contours of leaves, plant regions significantly intersect in a spatial domain; and
segmenting out leaves of the one or more plants using a predefined deep learning segmentation technique, wherein a predefined Convolutional Neural Network (CNN) model is used to identify if the leaves detected is at very early growth stage with small leaves.

10. The system (100) as claimed in claim 8, wherein the pre-processed plurality of images is transformed into a frequency domain to convert into a pseudo-spectral like waveform using a pseudo-spectral analysis based glassiness detector module.

11. The system (100) as claimed in claim 8, wherein the anomaly layering detection index-score evaluates health of the one or more plants on the bench on a scale of 0 for healthy to a 100 completely unhealthy or has one or more anomalies in scope by assessing anomalies in the leaves and the one or more plants, factoring in the one or more anomalies, overlapping regions, empty pots and plant growth stages.

12. The system (100) as claimed in claim 8, wherein a predefined conditional generative adversarial network (CGAN) is used to generate synthetic plant images exhibiting yellowing, blackening, glassiness and tip burn, address data scarcity and ensure balanced data across all classes with realistic images at all points of time.

13. The system (100) as claimed in claim 8, wherein a synthetic severity image generator focuses on feature preservation comprising reflectance distribution, color uniformity, and edges for glassiness condition and edge curvature, textural gradient, and burn spots for tip burn condition.

14. The system (100) as claimed in claim 8, wherein the one or more anomalies include a glassiness, a tip burn, a blackening, and a yellowing.

15. One or more non-transitory machine-readable information storage mediums comprising one or more instructions which when executed by one or more hardware processors cause:
receiving via an Input/Output (I/O) interface, a plurality of images of one or more plants in a controlled environment as input;
pre-processing the received plurality of images using a predefined deep learning technique to perform data homogenization and structural isolation followed by a pseudo-spectral signal extraction and waveform transformation to identify deviations indicative of phenotypic anomalies;
analyzing the pre-processed plurality of images using an anomaly detector to identify one or more anomalies in each of the one or more plants, wherein the identified one or more anomalies in each of the one or more plants are consumed by an Anomaly Layering Detection Index (ALDI) generator module to provide an index based on localization and layering of the one or more anomalies in each of the one or more plants;
estimating severity of each of the one or more anomalies in the one or more plants from values of the index using an anomaly severity estimator, wherein a severity percentage is estimated using a predefined synthetic severity generation module;
combining the estimated severity for each of the one or more anomalies using an integrated severity score generation to get a final severity score for the one or more identified one or more anomalies, wherein an overall severity percentage is determined for a bench;
analyzing the identified one or more anomalies and the overall severity percentage to determine a potential root cause and a possibility ranking of causal factors via a predefined Root Cause Analysis and Ranking (RCAR) module;
calculating a Zone Health Index (ZHI), Bench Health Index (BHI), Rack Health Index (RHI), and a severity trend to analyze progress of the severities over time using a predefined deep learning model, wherein temporal and environmental features are combined for predicting the severity trend for each of the one or more plants in the controlled environment;
generating a persona based comprehensive recommendation of final health index (FHI) based on the calculated ZHI, BHI, RHI, and a severity trend for improving plant health using a predefined large language model (LLM) based advisor module.
